# EUROPEAN PATENT APPLICATION

(11) **EP 1 398 842 A1**
(43) Date of publication of application: **17.03.2004**
(21) Application number: 02741185.9
(22) Date of filing: 13.06.2002
(51) Int. Cl.: H01M 8/04, H01M 8/00, F02G 5/04

(54) **COGENERATION APPARATUS, COGENERATION METHOD, PROGRAM, AND MEDIUM**

(30) Priority: 18.06.2001 JP 2001183258; 19.10.2001 JP 2001321658
(71) Applicant: MATSUSHITA ELECTRIC INDUSTRIAL CO., LTD., Kadoma-shi, Osaka 571-8501 (JP)
(72) Inventor: MIYAUCHI, Shinji, Shiki-gun, Nara 636-0311 (JP); UEDA, Tetsuya, Kasugai-shi, Aichi 487-0032 (JP); KAKE, Nin, Ikoma-shi, Nara 630-0254 (JP); YAMAMOTO, Yoshiaki, Katano-shi, Osaka 576-0022 (JP); IKOMA, Mitsuhiro, Ikoma-shi, Nara 630-0123 (JP)
(74) Representative: Grünecker, Kinkeldey, Stockmair & Schwanhäusser Anwaltssozietät
(86) International application number: PCT/JP2002/005873
(87) International publication number: WO 2002/103830

(57) **Abstract**

It has been expected that more economical power generation could be performed using a fuel cell. The present invention provides a fuel cell power generation apparatus including a fuel cell 1 for generating power and heat to be supplied to a consumption point, storing means 11 of storing data on past patterns of time variations of power and/or heat consumption at the consumption point, power controlling means 12 of performing control for regulating power generation carried out based on the stored data and flow rate controlling means 4.

## Description

### Technical Field

The present invention relates to a cogeneration apparatus, cogeneration method, program and medium for generating power using a fuel cell, etc.

### Background Art

(A) Figure 6 shows a configuration of a conventional fuel cell power generation system disclosed in Japanese Patent Laid-Open No. 6-325774 or the like.
   A fuel cell 41 allows a fuel gas supplied from fuel gas supplying means 42 to react with oxygen in the air supplied from air supplying means 43 to generate a DC current.
   The DC current generated is converted to an AC current and output by a power converter 44. Exhaust heat of the fuel cell 41 is supplied to a heat accumulator 46 through a vapor separator 45.
   A control apparatus 47 controls a charging/discharging apparatus 48 and the power converter 44 and can control power output according to an external load through charging/discharging to/from the charging/discharging apparatus 48 and heat exchange with the heat accumulator 46 even if a current value output from the fuel cell 41 is constant.

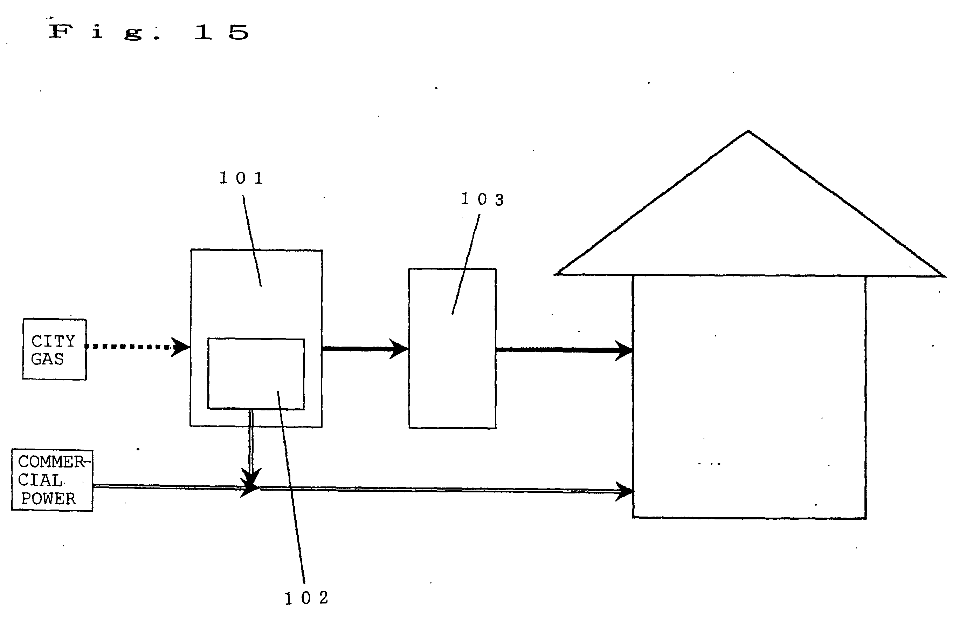

(B) Figure 15 shows a configuration of a conventional cogeneration system. The conventional cogeneration system generates power at a power generation section 102 inside a cogeneration apparatus 101 using a fuel including hydrocarbon such as methane of city gas, etc. There are methods of power generation carried out by the power generation section 102 such as a method of power generation by rotating a power generator using an internal combustion engine or turbine and a method of power generation by converting the fuel to a gas containing hydrogen using a reformer and generating power using a fuel cell. The power obtained through power generation is system-interconnected with commercial power and supplied to a power load.

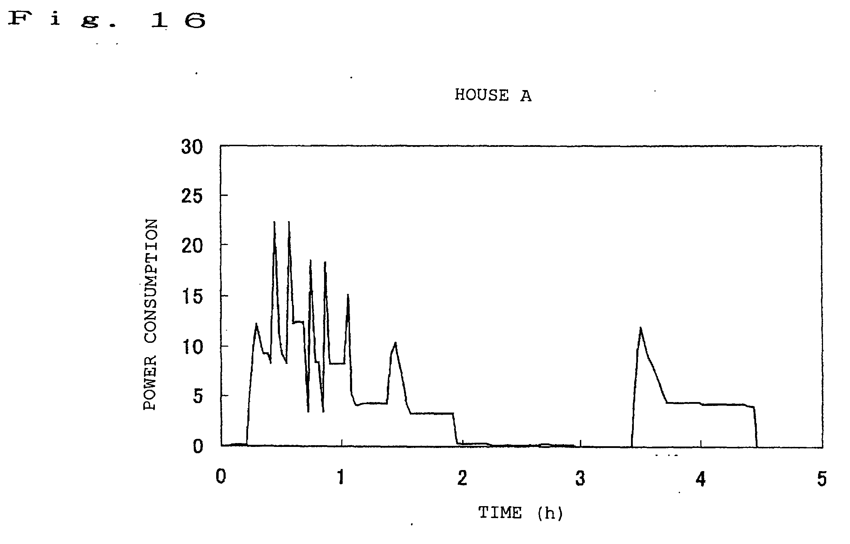

Figure 16 shows a variation of power load at a general house and shows values in an arbitrary unit. Power consumption at a house changes drastically with time. Power consumption during late night hours or unattended time is several tens of W. In contrast, when startups of a number of motors, etc. , occur simultaneously, power consumption reaches several tens of kW.

When the power load is large compared to an amount of power generated from the cogeneration apparatus 101, power corresponding to the difference is supplied from commercial power. On the other hand, when the power load is small compared to the amount of power generated, power corresponding to the difference is supplied to the commercial power, that is, so-called "reverse power flow" occurs. However, a purchasing price for power generated through cogeneration during an reverse power flow is by far lower than a power purchasing price, and therefore it is a general practice that an amount of power generation is adjusted and controlled so as to reduce the amount of power of the reverse power flow. Thus, a rated amount of power generation of the cogeneration apparatus is set to about half or below a maximum load.

Furthermore, energy converted by the power generation section 102 is about 20 to 30% of energy supplied and the rest of energy is exhausted as thermal energy. This thermal energy is recollected as vapor or hot water and supplied to a hot water supply load. The amount of thermal energy is substantially proportional to the amount of power generation. Therefore, when the power load decreases and the amount of power generation decreases, the amount of thermal energy also decreases. In general, a variation of a power load does not match a variation of a hot water supply load, and therefore energy of either side needs to be stored. For this purpose, a hot water tank 103 is used.
(A) However, in the case of the above-described conventional fuel cell power generation system (see Figure 6) , when power output is controlled according to a drastically varying external load, the amount of discharging or charging of the charging/discharging apparatus 48 is quite large because the current value output from the fuel cell 41 is constant. The present inventor has noticed that the fuel cell power generation system would become a non-economical system for this reason.
   More specifically, as shown in Figures 7 and 8, the amount of power and heat consumed drastically changes in a day. The demand increases from morning, daytime, evening until night, and, both the load and demand decrease for hours other than these (period A in Figure 7 and period B in Figure 8). Furthermore, depending on the season, there are variations of demand, for example, demand for cooling during a summer season and demand for heating during a winter season. For these reasons, an operation to always keep constant the amount of power generation of the fuel cell 41 involves problems (1) that there are excess and deficiency in the amount of storage in the charging/discharging apparatus 48 and the amount of heat accumulated in the heat accumulator 46 and (2) that the charging/discharging apparatus 48 of a large capacity is required, which results in a high cost and large installation space for the system.
(B) Moreover, the conventional cogeneration system (see Figure 15) has difficulty in quickly responding to variations in demands for power and heat and securing economical efficiency.

More specifically, (1) since there is a large variation of a power load andmost of operations correspond to operations with a partial load, which results in a small total amount of power generated and a reduced effect of reducing heating and lighting cost through cogeneration. (2) An abrupt variation in power generation and a hot water supply load makes it difficult to follow up the load accurately, reduces a self-sufficiency rate with respect to the power load and makes it difficult to achieve the effect of reducing heating and lighting cost. (3) Mismatch between a power load and hot water load at a house increases the size of a hot water tank and causes the hot water load to be more heavily concentrated than the power load, making hot water supply fail to meet the demand. (4) As a result of the problems described above, initial investment for the cogeneration system is increased, which causes the user to have hesitation in installing the system itself.

### Disclosure of the Invention

The present invention has been achieved by taking into account the above-described problems and it is an object of the present invention to provide a cogeneration apparatus, cogeneration method, program and medium capable of generating power using a fuel cell, etc., more economically.

A first invention of the present invention is a cogeneration apparatus, comprising:
power and heat generating means of generating power and heat to be supplied to a consumption point;
storing means of storing data on past patterns of time variations of power and/or heat consumption at said consumption point; and
controlling means of performing control for regulating said generation of power and/or heat to be performed, based on said data stored.

A second invention of the present invention is the cogeneration apparatus according to the first invention, further comprising:
detecting means of detecting time variations of power and/or heat consumption at said consumption point; and
updating means of updating said data stored, based on said detection result.

A third invention of the present invention is the cogeneration apparatus according to the second invention, further comprising fuel supplying means of supplying a fuel to generate said power and heat for said power and heat generating means,
wherein the control for regulating said generation of power and/or heat to be performed is control over a supply of said fuel.

A fourth invention of the present invention is the cogeneration apparatus according to the third invention, further comprising charging/discharging means of charging using said generated power and discharging using said charged power.

A fifth invention of the present invention is the cogeneration apparatus according to the fourth inveniton,
wherein the control over a supply of said fuel is performed considering an amount of storage of said charging/discharging means.

A sixth invention of the present invention is the cogeneration apparatus according to the third invention, further comprising:
hot water storing means of storing hot water using said generated heat; and
heating means of heating said stored hot water using said generated power.

A seventh invention of the present invention is the cogeneration apparatus according to the first inveniton, further comprising user-instructed data changing means of changing said stored data based on instructions of a user.

An eighth invention of the present invention is the cogeneration apparatus according to the first invention,
wherein there is a plurality of consumption points to which said generated power and heat is supplied, and the time variations of said power and/or heat consumption at said plurality of consumption points are a sum total of time variations of said power and/or heat consumption at each of said consumption points with respect to all of said plurality of consumption points.

A ninth invention of the present invention is the cogeneration apparatus according to the eighth invention,
wherein the time variations of said power and/or heat consumption at each of said consumption points are complementary.

A tenth invention of the present invention is the cogeneration apparatus according to the ninth invention,
wherein the time variations of said power and/or heat consumption at each of said consumption points are complementary means that not all time zones in which said power and/or heat is consumed at each of said consumption points are the same for all of saidplurality of consumption points.

An eleventh invention of the present invention is the cogeneration apparatus according to the tenth inveniton,
wherein said plurality of consumption points is a plurality of houses, all of which are not the same in (1) layout, (2) area and (3) composition of residents.

A twelfth invention of the present invention is the cogeneration apparatus according to the eleventh invention,
wherein said power and heat generating means is a plurality of fuel cells leased for a leasing charge to each of said houses, and
said leasing charge for each house is determined according to power and/or heat consumption at said each house.

A thirteenth invention of the present invention is the cogeneration apparatus according to the first invention,
wherein there is a plurality of said power and heat generating means, and
the control for regulating said generation of power and/or heat is control for changing the number of said plurality of power and heat generating means to be operated.

A fourteenth invention of the present invention is a cogeneration method, comprising:
power and heat generating step of generating power and heat to be supplied to a consumption point;
a storing step of storing data on past patterns of time variations of power and/or heat consumption at said consumption point; and
a controlling step of checking said stored data, anticipating variations in consumption of power and/or heat to occur at said consumption point, and starting control for regulating said generation of power and/or heat to be'performed.

A fifteenth invention of the present invention is a program to allow a computer to execute all or some of the storing step of storing data on past patterns of time variations of power and/or heat consumption at said consumption point, and the controlling step of checking said stored data, anticipating variations in consumption of power and/or heat to occur at said consumption point, and starting control for regulating said generation of power and/or heat to be performed, of the cogeneration method according to claim 14.

A sixteenth invention of the present invention is a medium which stores a program according to the fefteenth invention and which can be processed by a computer.

### Brief Description of the Drawings

Figure 1 is a block diagram of a fuel cell power generation apparatus according to Embodiment 1 of the present invention;
Figure 2 is a block diagram of a fuel cell power generation apparatus according to Embodiment 2 of the present invention;
Figure 3 is a block diagram of a fuel cell power generation apparatus according to Embodiment 3 of the present invention;
Figure 4 is a block diagram of a fuel cell power generation apparatus according to Embodiment 4 of the present invention;
Figure 5 is a block diagram of a fuel cell power generation apparatus according to Embodiment 5 of the present invention;
Figure 6 is a block diagram of a conventional fuel cell power generation system;
Figure 7 illustrates a variation of usage of electric power by time in one day at a general house;
Figure 8 illustrates a variation of demand for heat by time in one day at a general house;
Figure 9 illustrates a variation of demand for hot water by time in one day at a general house;
Figure 10 is a block diagram of another fuel cell power generation apparatus according to Embodiment 6 of the present invention;
Figure 11 is a block diagram showing a cogeneration system according to Embodiment 6 of the present invention;
Figure 12 is a block diagram showing a cogeneration system according to Embodiment 7 of the present invention;
Figure 13 illustrates a variation of a power load at a house B according to Embodiment 7 of the present invention;
Figure 14 illustrates a variation of a total power load at houses A, B and C according to Embodiment 7 of the present invention;
Figure 15 is a block diagram showing a conventional cogeneration system; and
Figure 16 illustrates a variation of a power load at house A according to Embodiment 7 of the present invention.

### [Description of Symbols]

1 FUEL CELL
2 FUEL GAS SUPPLYING MEANS
3 OXIDIZER GAS SUPPLYING MEANS
4 FLOW RATE CONTROLLING MEANS
5 POWER CONVERTING MEANS
7 SYSTEM POWER SUPPLY
8 LOAD POWER DETECTING MEANS
9 POWER LOAD
10 TIME COUNTING MEANS
11 STORING MEANS
12 POWER CONTROLLING MEANS
101, 111, 121 COGENERATION APPARATUS
103, 112, 122 HOT WATER TANK
113, 124 WATT-HOUR METER
114, 125 HOT WATER LEVEL METER
115 OPERATING MODE DECISION APPARATUS
116, 126 OPERATION CONTROL APPARATUS
118 HOUSE
123 BACKUP BURNER
127 HOUSE A
128 HOUSE B
129 HOUSE C

### Best Mode for Carrying Out the Invention

With reference now to the attached drawings, embodiments of the present invention will be explained in detail below.

### (Embodiment 1)

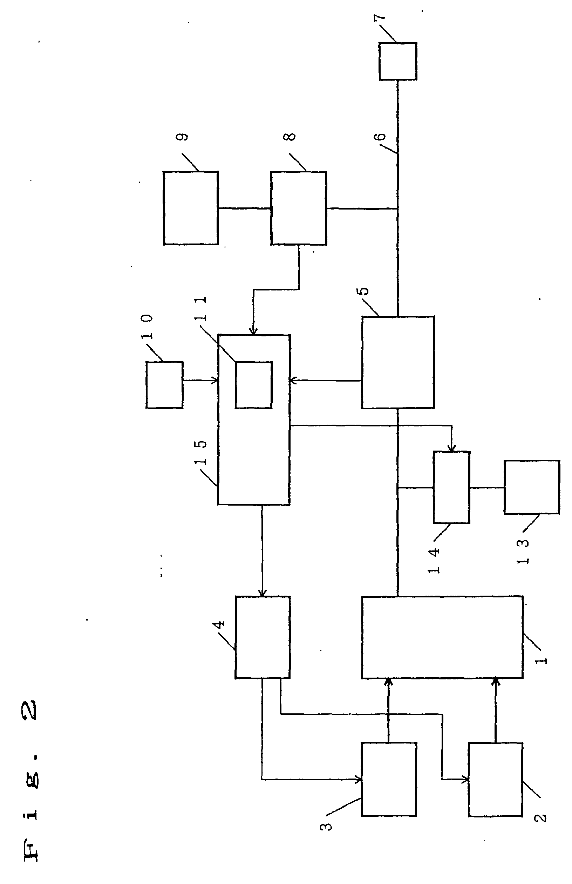

First, a configuration of a fuel cell power generation apparatus according to Embodiment 1 will be explained. Figure 2 is a block diagram of the fuel cell power generation apparatus according to Embodiment 1 of the present invention.

Reference numeral 1 denotes a fuel cell that generates power and heat to be supplied to a consumption point and is connected to fuel gas supplying means 2 represented by a reformer, hydrogen storage alloy or hydrogen bomb and oxidizer gas supplying means 3 represented by a blower fan, blower pump, etc.

Reference numeral 4 denotes flow rate controlling means of controlling a flow rate of a fuel gas supplied from the fuel gas supplying means 2 and a flow rate of an oxidizer gas supplied from the oxidizer gas supplying means 3.

Reference numeral 5 denotes power converting means and is connected in such a way that DC power from the fuel cell 1 is converted to AC power and output.

Reference numeral 6 denotes an output line electrically connected to the power converting means 5, is branched at some midpoint and electrically connected to a public utility power supply 7 on one hand, and to load power detecting means 8 and to a power load 9 on the other.

Reference numeral 10 denotes time countingmeans such as a timer for measuring time and duration.

Reference numeral 11 denotes storing means such as a semiconductor memory for storing an amount of power used at each time.

Reference numeral 12 incorporates the storing means 11, which denotes power controlling means of (1) receiving an amount of loadpower detectedby the loadpower detecting means 8, a time count signal from the time counting means 10, a voltage and current generated by the fuel cell 1 from the power converting means 5, (2) allowing the storing means 11 to store an amount of load power at each time, and (3) outputting flow rate control signals of a fuel gas and oxidizer gas to the flow rate controlling means 4 according to a daily load characteristic of a power load based on the load power amount monitoring information from the storing means 11.

Then, an operation of the fuel cell power generation apparatus according to Embodiment 1 of the present invention will be explained. While explaining the operation of the fuel cell power generation apparatus according to this Embodiment 1, an embodiment of the cogeneration method of the present invention will also be explained (the same will apply to the subsequent embodiments).

The fuel gas supplied from the fuel gas supplying means 2 reacts with oxygen in the oxidizer gas supplied from the oxidizer gas supplying means 3 in the fuel cell 1 and generate a DC current.

The DC current generated is sent to the power converting means 5, converted to an AC current with the same voltage as that of the public utility power supply 7 and supplied to the power load 9 through the output line 6. Here, if the output power of the fuel cell 1 is insufficient with respect to the load power of the power load 9, power is also supplied from the public utility power supply 7, and on the contrary, if the output power is excessive with respect to the load power, power is returned to the public utility power supply 7 to carry out so-called "system interconnection."

One of advantages in carrying out power generation using the fuel cell power generation apparatus is economical efficiency resulting from high power generation efficiency, but if the output power of the fuel cell 1 is insufficient with respect to the loadpower, power is purchased from the public utility power supply 7 which is comparatively high in price and if the output power of the fuel cell 1 is excessive with respect to the load power, power is returned to the public utility power supply 7 free of charge (or at an extremely low price) , and therefore its economical efficiency generally tends to deteriorate. It is for that reason that it is desirable to follow up the output power according to a variation of the load power in such a way that the output power becomes neither too much nor too little with respect to the load power.

As the means of performing this follow-up, the load power detecting means 8 detects load power of the power load 9 beforehand and the power controlling means 12 allows the storing means 11 to store patterns according to which the load power varies with time. Then, the power controllingmeans 12 gives the flow rate controllingmeans 4 an output command so that the power generation output conforms to a level commensurate with the power load based on the patterns stored in the storing means 11.

The flow rate controlling means 4 performs control so that both the flow rate of the fuel gas supplied from the fuel gas supplying means 2 to the fuel cell 1 and the flow rate of the oxidizer gas supplied from the oxidizer gas supplying means 3 to the fuel cell 1 become a flow rate according to the output command from the power controlling means 12. Furthermore, the power converting means 5 converts a DC current generated from the fuel cell 1 to AC power of the public utility power supply 7.

Here, the output power can also be controlled only by controlling a DC current of the power converting means 5. However, even if, for example, a DC current generated from the fuel cell 1 is reduced, if the flow rate of the fuel gas supplied to the fuel cell 1 is constant, the ratio of the fuel gas (fuel gas utilization rate) which reacts inside the fuel cell 1 reduces and a great amount of fuel gas may be abandoned, which significantly deteriorates the efficiency. Thus, the power controlling means 12 always keeps the efficiency to an optimal level by controlling the flow rate of the fuel gas and flow rate of the oxidizer gas to appropriate values through the flow rate controlling means 4.

In this series of follow-up control, load power at a general household changes drastically in a short time in a day as shown in Figure 7 and at the same time average power also increases/decreases with time. Generally, the average power tends to change at a ratio of maximum power usage to minimum power usage of 3:1 to 2:1. Especially, minimum usage of power continues from the nighttime to morning hours, which corresponds to a period (period A in Figure 7) during which the user's activity is stopped. Thus, a power load demand generally has periodicity and regularity specific to each household and a similar load pattern is often repeated.

The power controlling means 12 allows the storing means 11 to store an amount of load power detected by the load power detecting means 8 as load power amount monitoring information (relationship between time in a day and amount of power used) indicating power corresponding to the time measured by the time counting means 10. Then, the power controlling means 12 outputs flow rate control signals of the fuel gas and oxidizer gas to the flow rate controlling means 4 so that the power output at each timing coincides with the power output indicated in the load power amount monitoring information.

The power controlling means 12 allows the storing means 11 to always update and store the amount of load power detected by the load power detecting means 8 as the load power amount monitoring information indicating the power corresponding to the time measured by the time counting means 10. For this reason, even if this load power amount monitoring information changes (e.g., when a load pattern changes due to an increase/decrease of the,number of family members, increase/decrease of the number of home appliances used) , it is possible to always store the latest load power pattern as a demand characteristic specific to the user and allow an economical operation by learning the latest load pattern.

Furthermore, seasonal demand variations can also be updated daily as a daily power load characteristic, which also allows an economical operation throughout a year. Furthermore, it is often the case that actual load power used changes drastically in a short time, but carrying out power output according to a load pattern based on the load power amount monitoring information at a speed change commensurate with the load follow-up performance of the fuel cell 1 beforehand makes it possible to realize a stable operation as the fuel cell power generation apparatus, extend the life and increase the reliability.

By the way, the means including the fuel cell 1 corresponds to the power and heat generating means of the present invention, the means including the storing means 11 corresponds to the storing means of the present invention, and the means including the power controlling means 12 and flow rate controlling means 4 corresponds to the controlling means of the present invention. Furthermore, the means including the load power detecting means 8 corresponds to the detecting means of the present invention and the means including the power controlling means 12 corresponds to the updating means of the present invention. Furthermore, the means including the fuel gas supplying means 2 and the oxidizer gas supplying means 3 corresponds to the fuel supplying means of the present invention. Furthermore, the fuel cell power generation apparatus of this embodiment corresponds to the cogeneration apparatus of the present invention.

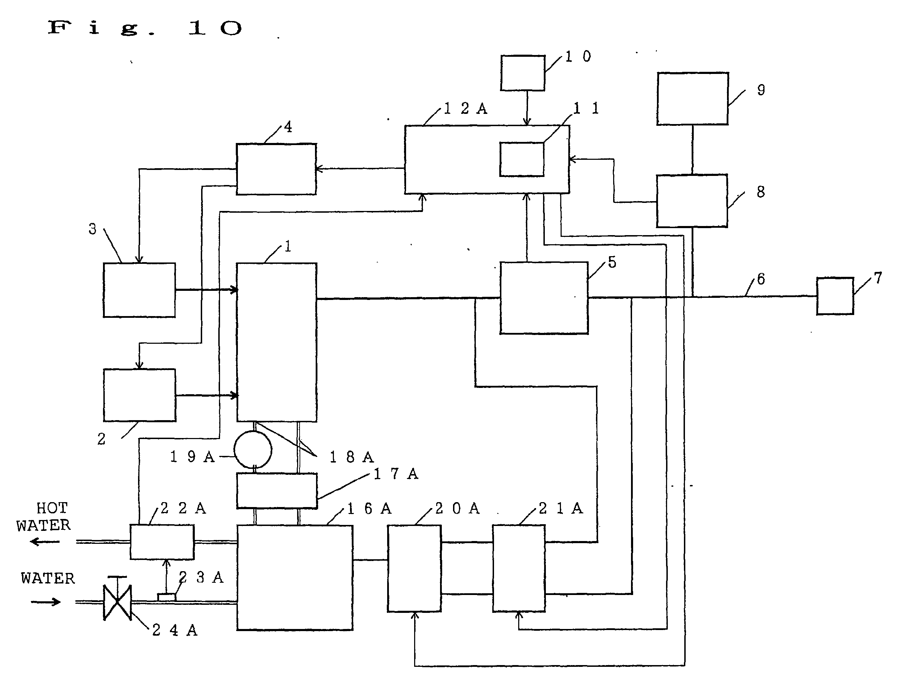

Furthermore, in the above-described embodiment, the storing means 11 stores a load power amount pattern which changes with time and is required by power load and the power controlling means 12 issues an output command to the flow rate controlling mans 4 so that the power generation output reaches a level commensurate with the power load. However, it is also possible to adapt the embodiment in such a way that the storing means 11 stores load heat amount patterns required for a time-variable heat load, heat output amount controlling means 12A corresponding to the power controlling means 12 is provided separately as shown in Figure 10, and the heat output amount controlling means 12A issues an output command to the flow rate controlling mean 4 so that the amount of heat generated commensurate with the heat load is output based on the load heat amount patterns stored in the storing means 11.

When explainedmore specifically, the fuel cell power generation apparatus shown in Figure 10 has the following configuration.

That is, reference numeral 16A denotes a hot water tank as exhaust heat recollectingmeans (hot water storing means) to recollect exhaust heat by power generation reaction from the fuel cell 1.

The fuel cell 1 and heat exchanger 17A are connected via a cooling water channel 18A, cooling water is circulated by the cooling water circulation pump 19A to recollect exhaust heat of the fuel cell 1. The exhaust heat which is heat-exchanged by the heat exchanger 17A is sent to the hot water tank 16A and stored therein.

Reference numeral 20A denotes a heater as heating means of increasing the amount of exhaust heat recollected of the hot water tank 16A further by DC power or AC power.

Reference numeral 21A denotes switching means of switching between the DC output of the fuel cell 1 as the power supply to the heater 20A and AC output of the public utility power supply 7.

Reference numeral 22A denotes heat load detecting means of detecting heat output from the hot water tank 16A, which calculates heat output of the hot water tank 16A from a water supply temperature from a water supply temperature sensor 23A that detects temperature of water supply to the hot water tank 16A, flow rate of hot water and hot water temperature.

Reference numeral 24A denotes a water supply valve for supplying water to the hot water tank 16A.

Furthermore, the apparatus is provided with heat load detecting means 22A for detecting an amount of heat output actually output from the hot water tank 16A and updating means 12A of updating a heat value pattern stored in the storingmeans 11 to the heat output amountpattern detected by the heat load detecting means 22A. This allows the heat output amount controlling means 12A to issue an output command to the flow rate controlling means 4 based on the updated pattern so that the amount of heating commensurate with the heat load is output. This allows an operation giving priority to a heat load and allows an economical operation with an amount of heating neither too much nor too little with respect to the heat load demand all the time.

### (Embodiment 2)

First, a configuration of a fuel cell power generation apparatus according to Embodiment 2 will be explained. Figure 2 is a block diagram of the fuel cell power generation apparatus according to Embodiment 2 of the present invention.

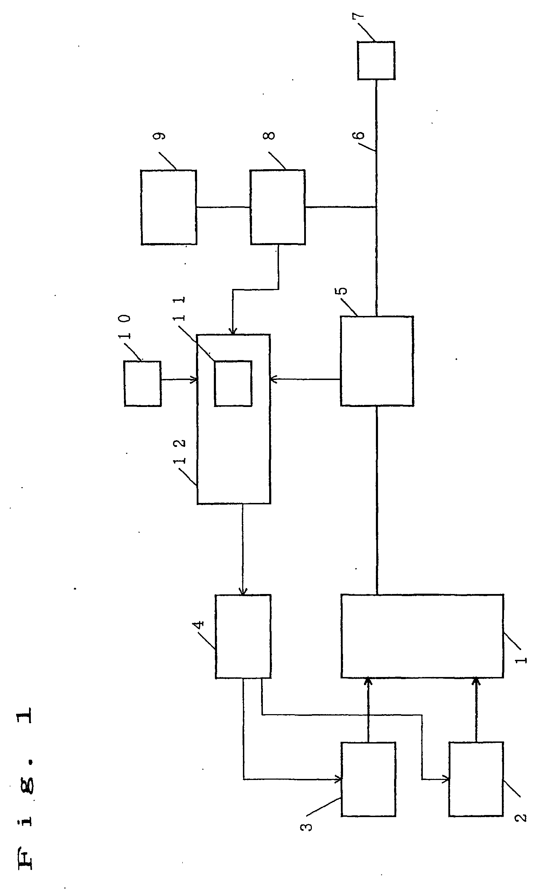

In Figure 2, the components having the same functions as those of the fuel cell power generation apparatus according to Embodiment 1 shown in Figure 1 are assigned the same reference numerals and assuming that details of those functions conform to Figure 1, explanations thereof will be omitted.

Reference numeral 13 denotes a secondary cell that stores DC power generated by a fuel cell 1.

Charging/discharging controlling means 14 of controlling charging and discharging of the secondary cell 13 controls charging from the fuel cell 1 and discharging to power converting means 5.

Reference numeral 15 denotes power storage controlling means of (1) receiving an amount of load power detected by the load power detecting means 8 and a time count signal from the time counting means 10, (2) allowing the storing means 11 to store the amount of load power at each time, and (3) outputting flow rate control signals of a fuel gas and oxidizer gas to flow rate controlling means 4 according to a daily load characteristic of power load based on the load power amount monitoring information from the storing means 11 and (4) controlling the amount of charging/discharging of the secondary cell 13 through the charging/discharging controlling means 14.

The secondary cell 13 is provided to counter the deterioration of economical efficiency due to excess or deficiency of output power with respect to load power in the aforementioned system interconnection in Embodiment 1 by using charging/discharging of the secondary cell 13, minimizing an amount of power supply from a public utility power supply 7 and an amount of power return to the public utility power supply 7 to improve economical efficiency.

Then, an operation of the fuel cell power generation apparatus according to Embodiment 2 will be explained.

Load power at a general household changes drastically in a short time in a day as shown in Figure 7 and at the same time average power also increases/decreases with time. Generally, the average power tends to change at a ratio of maximum power usage to minimum power usage of 3:1 to 2:1. Especially, minimum usage of power continues from the nighttime to morning hours which corresponds to a period (period A in Figure 7) during which the user' s activity is stopped. Thus, a power load demand generally has periodicity and regularity specific to each household and a similar load pattern is often repeated.

First of all, the load power detecting means 8 detects load power of the power load 9 and the power storage controlling means 15 allows the storing means 11 to store a pattern according to which the load power changes with time.

Then, based on the pattern stored in the storing means 11, the power storage controlling means 15 outputs an output command to the flow rate controlling means 4 so that the power generation output has a value commensurate with the power load.

The flow rate controlling means 4 performs control so that both the flow rate of the fuel gas supplied from the fuel gas supplying means 2 to the fuel cell 1 and the flow rate of the oxidizer gas supplied from the oxidizer gas supplying means 3 to the fuel cell 1 become a flow rate thatmatches the output command from the power storage controlling means 15.

Furthermore, the power converting means 5 converts a DC current generated from the fuel cell 1 to AC power of the public utility power supply 7.

Here, the power storage controlling means 15 makes up the shortage of generated power for the power load 9 and outputs the power from the secondary cell 13 through the charging/discharging controlling means 14.

Furthermore, the power storage controlling means 15 allows the storing means 11 to store an amount of load power detected by the load power detecting means 8 as load power amount monitoring information (relationship between time in a day and amount of power used) indicating power corresponding to time measured by the time counting means 10. Then, the power storage controlling means 15 outputs a flow rate control signal for controlling the flow rate of the fuel gas or oxidizer gas to the flow rate controlling means 4 so that power output becomes equal to the output power indicated in the load power amount monitoring information at each timing. Furthermore, the power storage controlling means 15 secures a charging time for changing the secondary cell 13 through the charging/discharging controlling means 14 when the power load of the fuel cell 1 is low and in a time zone during which the output voltage of the fuel cell 1 suitable for charging of the secondary cell 13 is high (period A in Figure 7).

This series of operation control in this embodiment is operation control which adds storage amount control of the secondary cell 13 to the follow-up control in Embodiment 1. Actual load power fluctuates considerably compared to average output power based on the load power amount monitoring information. Because of this, it is not always possible to realize power output control in such a way that the amount of discharging is almost equal to the amount of charging to compensate for the amount of storage of the secondary cell 13 all the time. Thus, this embodiment checks the load power amount monitoring information of the storing means 11 and secures the amount of storage of the secondary cell 13 in a time zone determined to be able to secure charging.

This makes it possible to allow the output power to follow up a variation of load power as much as possible so that output power is neither too much nor too little with respect to the load power, reduce power exchanged with the public utility power supply 7 and thereby realize economical operation.

By the way, the means including the secondary cell 13 corresponds to the charging/discharging means of the present invention. Furthermore, the means including the power storage controlling means 15 and charging/discharging controlling means 14 corresponds to the controlling means of the present invention. Furthermore, the fuel cell power generation apparatus of this embodiment corresponds to the cogeneration apparatus of the present invention.

### (Embodiment 3)

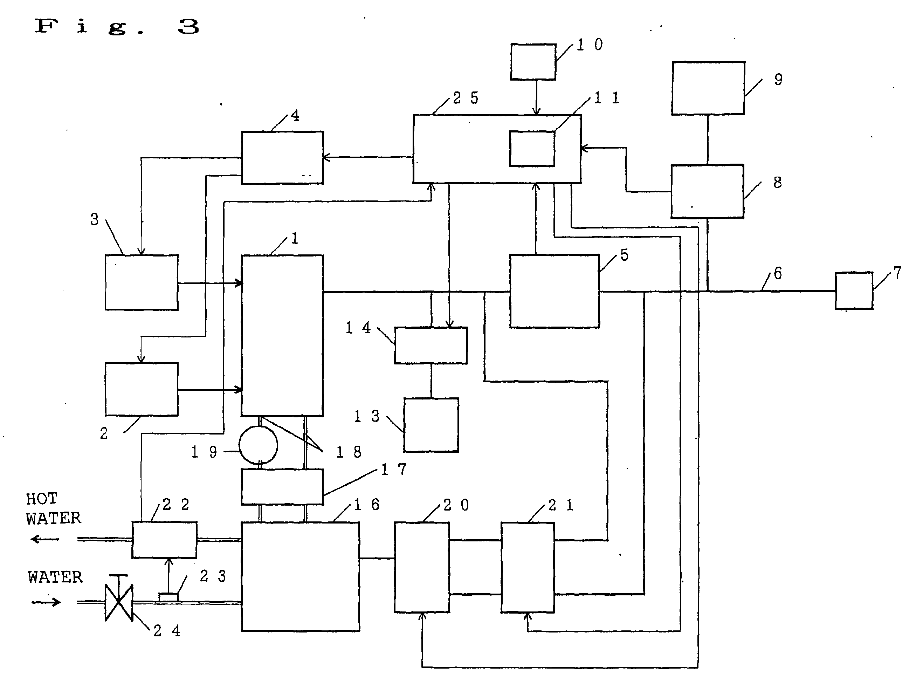

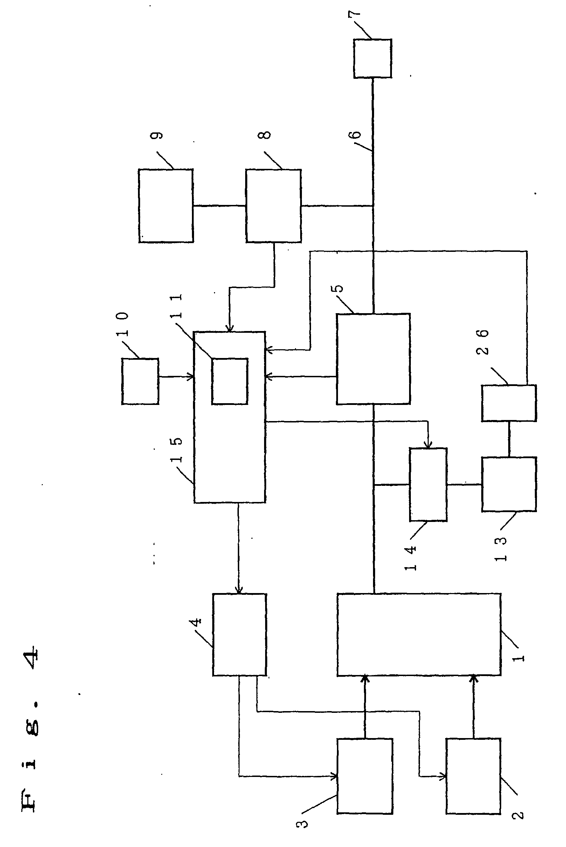

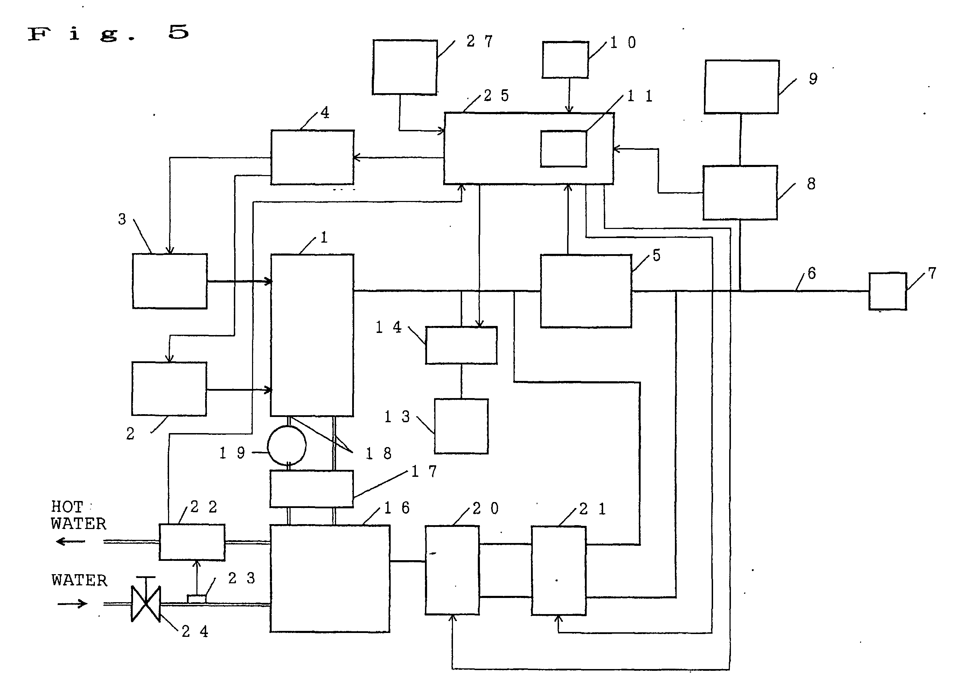

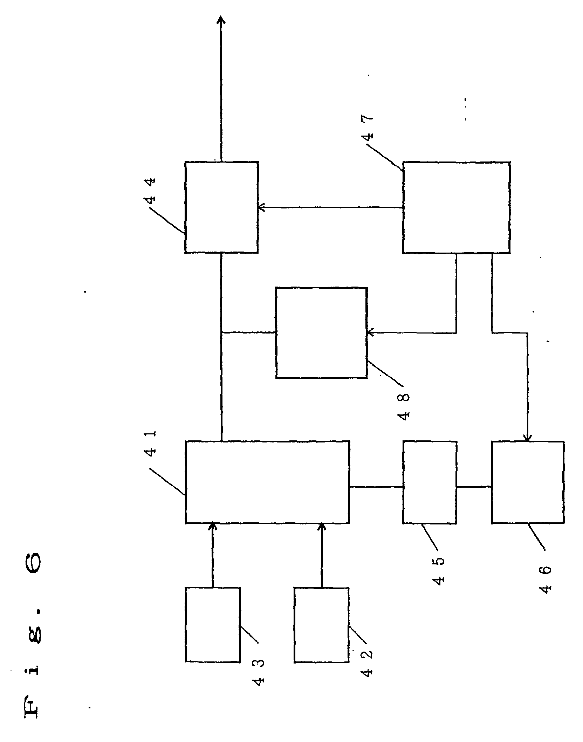

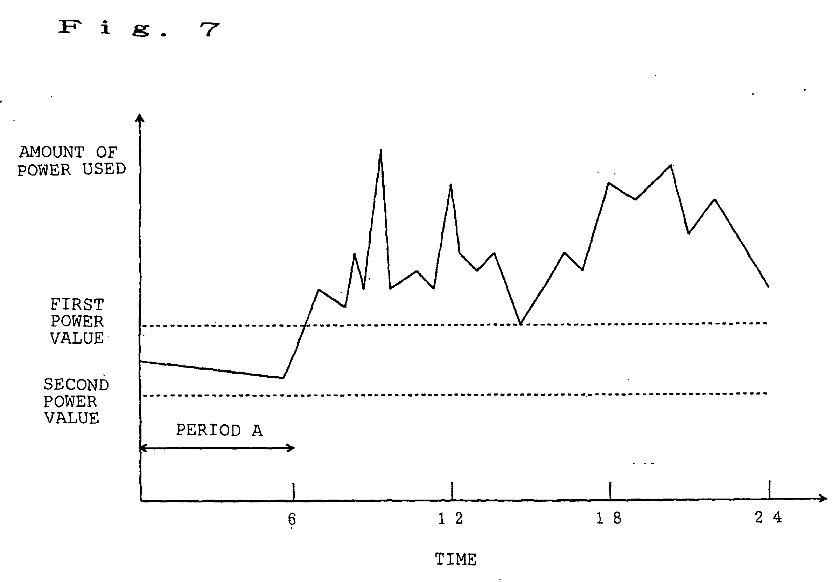

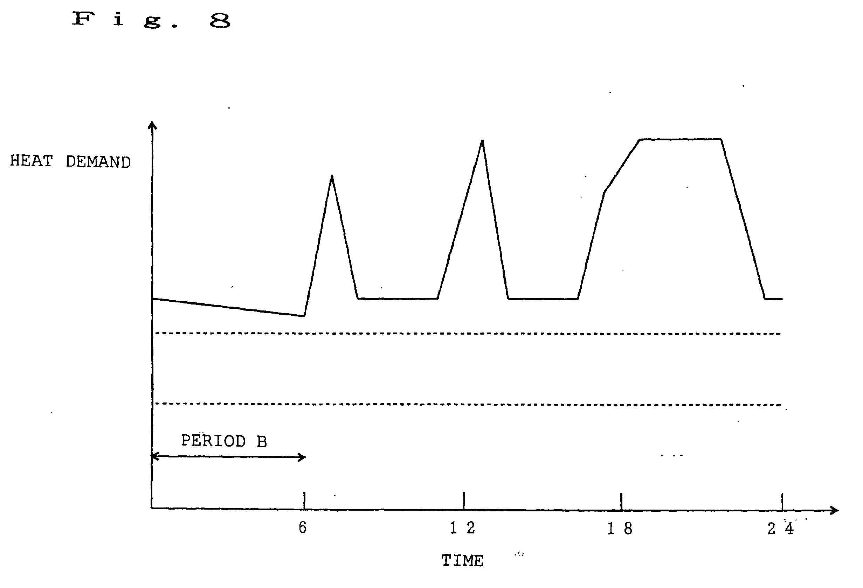

First, a configuration of a fuel cell power generation apparatus according to Embodiment 3 will be explained. Figure 3 is a block diagram of the fuel cell power generation apparatus according to Embodiment 2 of the present invention.

In Figure 3, the components having the same functions as those of the fuel cell power generation apparatus of Embodiment 1 shown in Figure 1 and the fuel cell power generation apparatus of Embodiment 2 shown in Figure 2 are assigned the same reference numerals and assuming that details of those functions conform to those in Figures 1 and 2, explanations thereof will be omitted.

Reference numeral 16 is a hot water tank as exhaust heat recollecting means of recollecting exhaust heat by power generation reaction from the fuel cell 1.

The fuel cell 1 and a heat exchanger 17 are connected via a coolingwater channel 18, coolingwater is circulated by a cooling water circulation pump 19 to recollect the exhaust heat of the fuel cell 1. The exhaust heat which is heat-exchanged by the heat exchanger 17 is sent to the hot water tank 16 and stored therein.

Reference numeral 20 denotes a heater as heatingmeans of further increasing the amount of exhaust heat recollected of the hot water tank 16 by DC power or AC power.

Reference numeral 21 denotes switching means of switching between the DC output of the fuel cell 1 as the power supply to the heater 20 and AC output of the public utility power supply 7.

Reference numeral 22 denotes heat load detecting means of detecting heat output from the hot water tank 16.

The heat output of the hot water tank 16 is calculated from a water supply temperature from a water supply temperature sensor 23 that detects temperature of water supply to the hot water tank 16, flow rate of hot water and hot water temperature.

Reference numeral 24 denotes a water supply valve for supplying water to the hot water tank 16.

Reference numeral 25 denotes thermal power storage controlling means of (1) receiving an amount of load power from the load power detecting means 8, an amount of heat load from the heat load detecting means 22 and a time count signal from the time counting means 10, (2) allowing the storing means 11 to store the amount of load power and the amount of heat load power at each time, (3) outputting flow rate control signals of a fuel gas and oxidizer gas to flow rate controlling means 4 according to a daily load characteristic of a power load based on the load power amount monitoring information and heat load monitoring information from the storing means 11, (4) controlling the amount of charging/discharging of the secondary cell 13 through the charging/discharging controlling means 14 and (5) outputting a heating control signal according to a daily load characteristic of heat load to the heater 20.

The purpose of providing the secondary cell 13 is the same as that in the case of Embodiment 2.

Then, an operation of the fuel cell power generation apparatus according to Embodiment 3 of the present invention will be explained.

Load power at a general house changes drastically in a short time in a day as shown in Figure 7 and at the same time average power also increases/decreases with time. Generally, the average power tends to change at a ratio of maximum power usage to minimum power usage of 3:1 to 2:1. Especially, minimum usage of power continues from the nighttime to morning hours which corresponds to a period (period A in Figure 7) during which the user's activity is stopped. Thus, a power load demand generally has periodicity and regularity specific to each household and a similar load pattern is often repeated.

As shown in Figure 9, the amount of heat (hot water) used of the hot water tank 16 drastically changes in a day, the demand rises from the morning through daytime, evening until nighttime and the amount of usage reduces in other time zones. Especially, the amount of hot water used is reduced to almost zero from the nighttime to morning hours which corresponds to a period (period C in Figure 9) during which the user's activity is stopped. Thus, as in the case of a power load demand, a demand for heat (hot water) load generally has periodicity and regularity specific to each household and a similar load pattern is often repeated.

Thus, the load power detecting means 8 detects load power of the power load 9 and the heat/power storage controlling means 25 allows the storing means 11 to store a pattern according to which the load power changes with time. Then, based on the pattern stored in the storing means 11, the heat/power storage controlling means 25 outputs an output command to the flow rate controlling means 4 so that the power generation output has a value commensurate with the power load.

The flow rate controlling means 4 controls both the flow rate of the fuel gas supplied from the fuel gas supplying means 2 and the flow rate of the oxidizer gas supplied from the oxidizer gas supplyingmeans 3 according to the output command appropriately.

Furthermore, the power converting means 5 converts a DC current generated from the fuel cell 1 to AC power of the public utility power supply 7.

Here, the heat/power storage controlling means 25 makes up the shortage of generated power for the power load 9 and outputs the power from the secondary cell 13 through the charging/discharging controlling means 14.

Furthermore, the heat/power storage controlling means 25 allows the storing means 11 to store an amount of load power detected by the load power detecting means 8 as load power amount monitoring information (relationship between time in a day and amount of power used) indicating power corresponding to time measured by the time counting means 10. Then, the heat/power storage controlling means 25 outputs flow rate control signals of the fuel gas and oxidizer gas to the flow rate controlling means 4 based on the load power amount monitoring information so that power output becomes equal to the output power indicated in the load power amount monitoring information at each timing. Furthermore, the heat/power storage controlling means 25 secures a charging time for changing the secondary cell 13 through the charging/discharging controlling means 14 when the power load of the fuel cell 1 is low and in a time zone during which the output voltage of the fuel cell 1 suitable for charging of the secondary cell 13 is high (period A in Figure 7).

This series of operation control in this embodiment is operation control which adds storage amount control of the secondary cell 13 to the follow-up control in Embodiment 1. Actual load power fluctuates considerably compared to average output power based on the load power amount monitoring information. Because of this, it is not always possible to realize power output control in such a way that the amount of discharging is almost equal to the amount of charging to compensate for the amount of storage of the secondary cell 13 all the time. Thus, this embodiment checks the load power amount monitoring information of the storing means 11 and secures the amount of storage of the secondary cell 13 in a time zone determined to be able to secure charging.

This makes it possible to allow the output power to follow up a variation of load power as much as possible so that output power is neither too much nor too little with respect to the load power, reduce power exchanged with the public utility power supply 7 and thereby realize economical operation.

By the way, the heat/power storage controlling means 25 stores the amount of heat load detected by the heat load detecting means 22 as heat load monitoring information indicating the amount of heat used corresponding to a time measured by the time counting means 10 in the storing mean 11. Then, the heat/power storage controlling means 25 calculates an amount of exhaust heat recollected to be originally obtained by power generation of the fuel cell 1 through operations based on this heat load monitoring information. The heat/power storage controlling means 25 checks the difference between the calculated amount of exhaust heat recollected and the actual demand for heat load estimated based on the heat load monitoring information, allows the fuel cell 1 to generate extra power to increase power by an amount corresponding to the power supply to the heater 20 during a period C in Figure 9 to cover the estimated shortage of the heat supply beforehand.

Of course, when the calculated amount of exhaust heat recollected is greater than the estimated actual heat load demand, a power supply to the heater 20 is unnecessary and the fuel cell 1 carries out power generation by adding only the power corresponding to the charging in the secondary cell 13.

This makes it possible to supply heat to follow up a variation of the heat load demand as much as possible so that the heat supply to meet the heat load demand is neither too much nor too little and thereby realize economical operation.

Of course, the above-described embodiment operates in such a way as to cover a power supply to the heater 20 by DC power through power generation by the fuel cell 1, but it goes without saying that the same effect can also be obtained using inexpensive midnight power of a general AC power supply from the public utility power supply 7.

By the way, the means including the hot water tank 16 corresponds to the hot water storingmeans of the present invention and the means including the heater 20 corresponds to the heating means of the present invention. Furthermore, the means including the heat load detecting means 22 corresponds to the detecting means of the present invention. Furthermore, the fuel cell power generation apparatus of this embodiment corresponds to the cogeneration apparatus of the present invention.

Furthermore, the above-described heat/power storage controlling means 25 can also be designed to (1) update the power amount pattern stored in the storing means 11 to the load power amount pattern detected by the load power detecting means 8 and/or (2) update the heat amount pattern stored in the storing means 11 to the heat amount pattern detected by the heat load detecting means 22. In that case, the amount of the fuel gas or oxidizer gas supplied to the fuel cell 1 after the update is determined based on the updated pattern.

### (Embodiment 4)

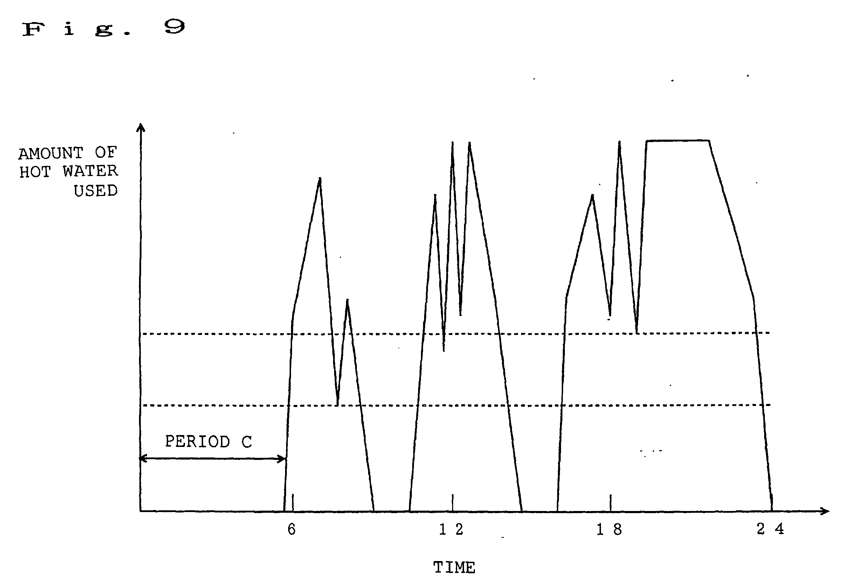

A configuration and operation of a fuel cell power generation apparatus according to Embodiment 4 will be explained. Figure 4 is a block diagram of the fuel cell power generation apparatus according to Embodiment 4 of the present invention.

In Figure 4, the components having the same functions as those of the fuel cell power generation apparatus of Embodiment 1 shown in Figure 1 and the fuel cell power generation apparatus of Embodiment 2 shown in Figure 2 are assigned the same reference numerals and assuming that details of those functions conform to those in Figures 1 and 2, explanations thereof will be omitted.

This embodiment is characterized by comprising charging power amount detecting means 26 of detecting an amount of charging power of a secondary cell 13.

The means including the charging power amount detecting means 26 corresponds to the detecting means of the present invention. Furthermore, the fuel cell power generation apparatus of this embodiment corresponds to the cogeneration apparatus of the present invention.

More specifically, when load power detected by the load power detecting means 8 is equal to or lower than a first power value shown in Figure 7 (that is, when the amount of power used is small and adding a charging current for charging the secondary cell 13 can cover power required) , the power storage controlling means 15 outputs a flow rate control signal for generating power with the charging power for the secondary cell 13 added to the flow rate controlling means 4 until the amount of charging power detected by the charging power amount detecting means 26 reaches a predetermined amount of charging power (e.g., 100% charging).

Since actual load power varies more than average output power based on the load power amount monitoring information, it is not always possible to perform power output control in such a way that the amount of discharging is almost equal to the amount of charging to compensate for the amount of storage of the secondary cell 13 all the time. Thus, it is possible to prevent deterioration of performance of the secondary cell 13 due to overcharging and thereby extend the life of the fuel cell power generation apparatus by checking the load power amount monitoring information of the storing means 11, securing the amount of storage of the secondary cell 13 in a time zone during which it is considered that there is power enough for charging, and detecting through the charging power amount detecting means 26 that charging of the secondary cell 13 is completed.

### (Embodiment 5)

A configuration and operation of a fuel cell power generation apparatus according to Embodiment 5 will be explained. Figure 5 is a block diagram of the fuel cell power generation apparatus according to Embodiment 5 of the present invention.

In Figure 5, the components having the same functions as those of the fuel cell power generation apparatus of Embodiment 1 shown in Figure 1 and the fuel cell power generation apparatus of Embodiment 3 shown in Figure 3 are assigned the same reference numerals and assuming that details of those functions conform to those in Figures 1 and 3, explanations thereof will be omitted.

This embodiment is characterized by comprising charging power amount detecting means 26 of detecting an amount of charging power of a secondary cell 13 and exhaust heat recollection amount increase inputting means (inputting emergency increase of heat demand and the amount of the increase by a remote control, etc.) 27 of increasing an amount of exhaust heat recollected of the hot water tank 16.

More specifically, when load power detected by the load power detecting means 8 is equal to or lower than a second power value shown in Figure 7 (that is, when the amount of power used is considerably small and adding a current for supplying the amount of heating power for a heater 20 to increase an amount of exhaust heat recollected of a hot water tank 16 can cover power required), heat/power storage controlling means 25 outputs a flow rate control signal for generatingpower with the charging power for the secondary cell 13 and required heating power for the heater 20 added to the flow rate controlling means 4 until the amount of charging power detected by the charging power amount detecting means 26 reaches a predetermined amount of charging power (e.g., 100% charging) and the amount of heating power required for the heater 20 is secured.

Since actual load power varies more than average output power based on the load power amount monitoring information as in the case of aforementioned Embodiment 4, it is not always possible to perform power output control in such a way that the amount of discharging is almost equal to the amount of charging to compensate the amount of storage of the secondary cell 13 all the time. Thus, it is possible to prevent deterioration of performance of the secondary cell 13 due to overcharging and thereby extend the life of the fuel cell power generation apparatus by checking the load power amount monitoring information of the storing means 11, securing the amount of storage of the secondary cell 13 in a time zone during which it is considered that there is power enough for charging, and detecting through the charging power amount detecting means 26 that charging of the secondary cell 13 is completed.

Furthermore, this embodiment is provided with the exhaust heat recollection amount increase inputtingmeans 27 of increasing an amount of exhaust heat recollected of the hot water tank 16 through manual operations by the user. Therefore, an emergent heat demand that cannot be covered by exhaust heat recollection based on the heat load monitoring information required by the heat load detecting means 22, time counting means 10 and storing means 11 can be covered by operating the heater 20 through the aforementioned manual operation by the user. This makes it possible to carry out a compensating operation of the heater 20 to complement the shortage during a low power load demand time from the night time to morning hours which corresponds to a period during which the user's activity is stopped, and secure a necessary amount of heat demand and a necessary amount of charging of the secondary cell.

By the way, the means including the exhaust heat recollection amount increase inputting means 27 corresponds to user-specified data changing means of the present invention. Furthermore, the fuel cell power generation apparatus of the present invention corresponds to the cogeneration apparatus of the present invention.

### (Embodiment 6)

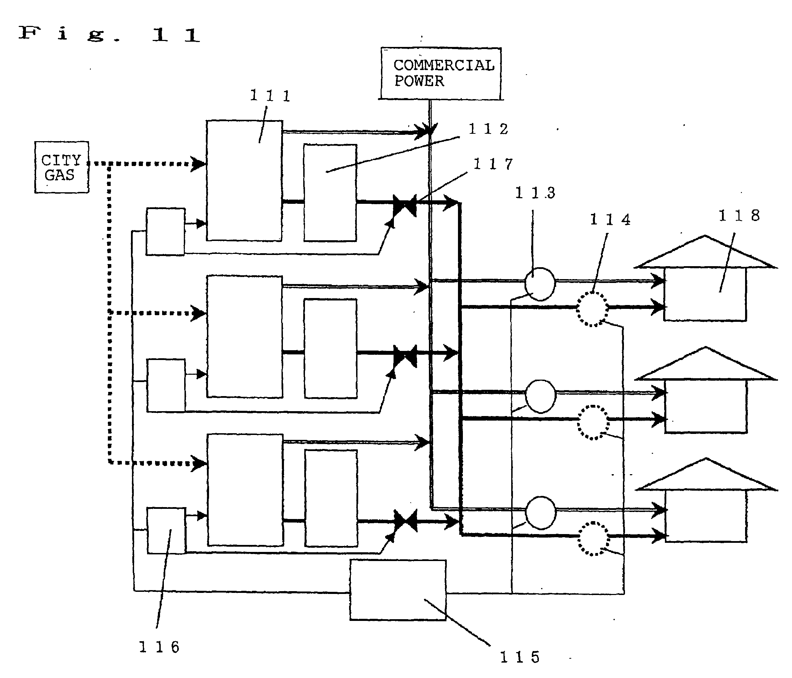

First, a configuration of a cogeneration system according to this embodiment will be explained. Figure 11 is a block diagram of the cogeneration system according to Embodiment 6 of the present invention.

As shown in Figure 11, the configuration system of this embodiment generates power at a cogeneration apparatus 111 using a fuel containing hydrocarbon such as methane of a city gas as a raw material.

Hot water is produced by heat generated at this time. Hot water is stored in a hot water tank 112. This embodiment shows an example using three cogeneration apparatuses. Each cogeneration apparatus is accompanied by a hot water tank 112.

This power and hot water is supplied to the load side through a watt-hour meter 113 and a hot water level meter 114.

Measured values of the watt-hour meter 113 and hot water level meter 114 are sent to an operating mode determination apparatus 115 and an operation control apparatus 116 provided for each cogeneration apparatus 111 controls operation based on the information processed here.

A hot water amount regulating valve 117 is provided at the output of each hot water tank 112 , which regulates an amount of hot water according to a command from the operation control apparatus 116.

By the way, the means including the cogeneration apparatus 111 corresponds to the power and heat generating means of the present invention and the means including the operating mode determination apparatus 115 and operation control apparatus 116 corresponds to the storing means and controlling means of the present invention. Furthermore, the means including the watt-hour meter 113 and hot water level meter 114 corresponds to the detecting means of the present invention. Furthermore, the means including the hot water tank 112 corresponds to the cogeneration apparatus of the present invention.

Then, an operation of the cogeneration system of this embodiment will be explained below. While explaining the operation of the cogeneration system of this embodiment, an embodiment of a cogeneration method of the present invention will also be explained (the same will also apply to the subsequent embodiments).

Power consumption and hot water consumption of each household are measured by the watt-hour meter 113 and hot water level meter 114 and sent to the operating mode determination apparatus 115.

The operating mode determination apparatus 115 determines an optimal operating mode according to a state of a sum total of consumption at each time point and sends a control signal to the operation control apparatus 116. For example, when the sum total of power load is small, only one of the cogeneration apparatuses 111 is operated. Then, the number of the cogeneration apparatuses 111 to be operated is controlled according to the sum total of power load.

The heat generated during power generation heats water in the hot water tank 112. Since the heating value at this time is almost proportional to the amount of power generation, the amount of hot water stored of the hot water tank 112 changes according to the operating hours of each cogeneration apparatus 111.

Therefore, the operating mode determination apparatus 115 determines an optimal amount of hot water supply from each hot water tank according to the sum total of the amount of hot water of each hot water tank 112 at each time point and the amount of hot water consumption at each household, sends a control signal to the operation control apparatus 116, and thereby controls a hot water amount regulating valve 117 and supplies hot water to each household.

Furthermore, electricity charges and hot water charges are measured, for example, by the watt-hour meter 114 andhot water level meter 115 provided at each household, recorded by the operation control apparatus 116 and charged to each household. In this system, it is also possible to install each cogeneration apparatus and each hot water tank on a basis of a lease contract and adopt a system of charging each household for lighting and heating expenses.

Thus, regulating the operating mode on the number of cogeneration apparatuses 111 to be operated makes it possible to provide a cogeneration system with high operation efficiency and an effect of drastically reducing lighting and heating expenses. By the way, it goes without saying that regulation of such an operating mode is also effective for when the system is used for only one house.

### (Embodiment 7)

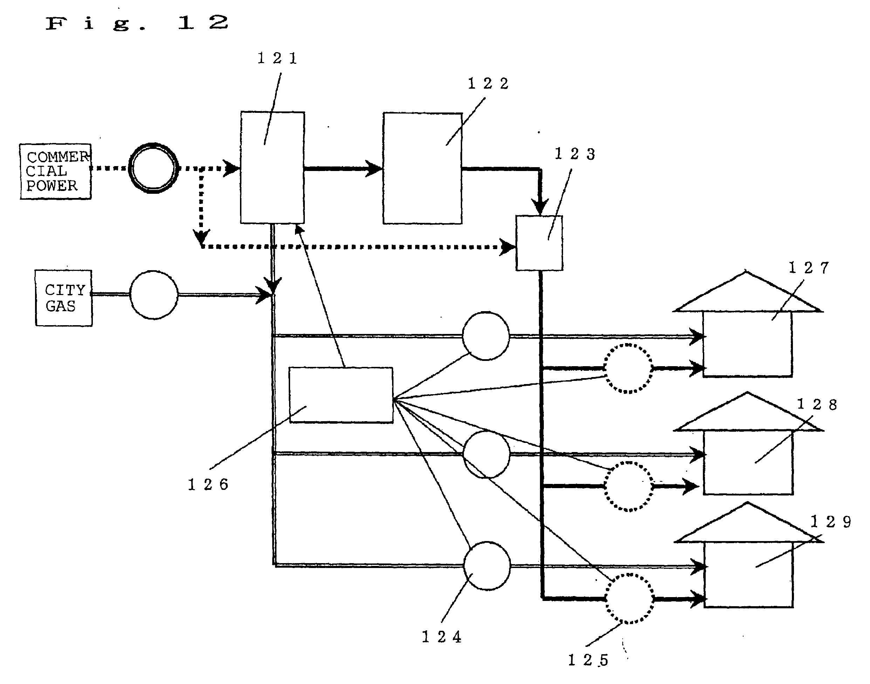

First, a configuration of a cogeneration system according to this embodiment will be explained. Figure 12 is a block diagram of the cogeneration system according to Embodiment 7 of the present invention.

Power is generated at a cogeneration apparatus 121 using a fuel containing hydrocarbon such as methane of a city gas as a raw material.

Hot water is produced by heat generated at this time. Hot water is stored in a hot water tank 122. A backup burner 123 for additional heating is installed at the output of the hot water tank 122.

On the load side, there are three houses, a house 127 (house A) , house 128 (house B) and house 129 (house C). Electric power and hot water are supplied to the load side through a watt-hour meter 124 and hot water level meter 125.

Information on the watt-hour meter 124 and hot water level meter 125 is collected at an operation control apparatus 126 and used to control the cogeneration apparatus 121.

By the way, the means including the cogeneration apparatus 121 corresponds to the power and heat generating means of the present invention and the means including the operation control apparatus 126 corresponds to the means including storing means and controlling means of the present invention. Furthermore, the means including the hot tank 122 corresponds to the hot water storing means of the present invention and the means including the backup burner 123 corresponds to the heating means of the present invention. Furthermore, the cogeneration system of this embodiment corresponds to the cogeneration apparatus of the present invention.

Then, an operation of the cogeneration system of this embodiment will be explained below.

An amount of power consumption (arbitrary unit) of house A in a certain time zone is shown in Figure 6.

Power consumption at a general house changes drastically with time. Power consumption during late night hours or unattended time is several tens of W. In contrast, when startups of a number of motors, etc. , occur simultaneously, power consumption reaches several tens of kW.

For example, when the cogeneration apparatus 121 whose amount of power generation is 10 on the vertical axis of Figure 16 is installed, it cannot perform rated operation in most of time zones and operates with partial load.

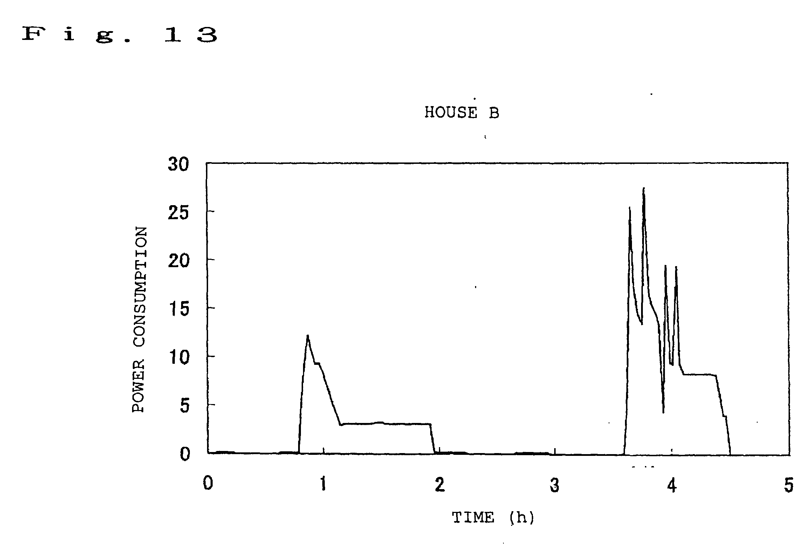

Furthermore, power consumption (arbitrary unit) of house B in a certain time zone is shown in Figure 13. Since the house B has different layout, occupation area or member composition, its variation amount of power consumption is different.

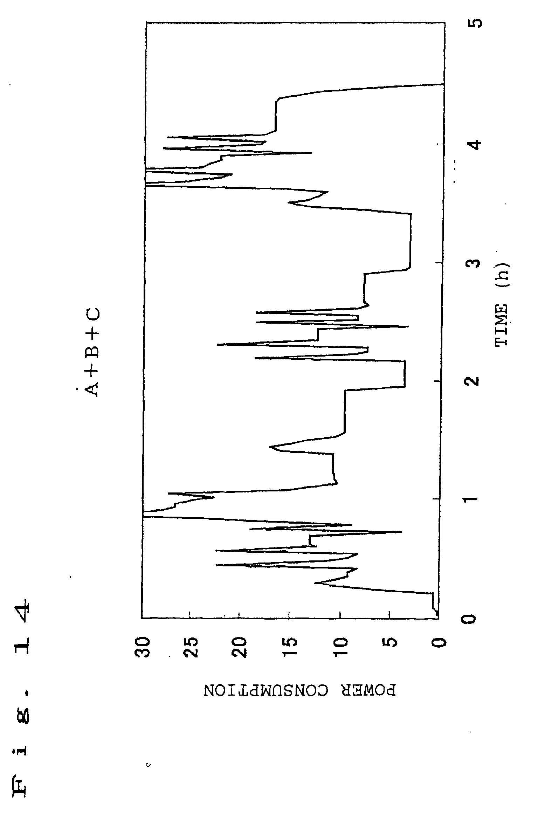

Figure 14 shows total power consumption which is a sum total of power consumption with power consumption (arbitrary unit) of a house C in a certain time zone which has different layout, occupation area, and member composition further added.

This embodiment introduces the cogeneration apparatus 121 whose amount of power generation is 10 on the vertical axis of Figure 14.

Thus, since a time zone in which consumption of power and heat totally differs from one consumption point to another, a time variation of consumption of power and heat at each consumption point becomes complementary. As a result, compared to a case of use by one house, the operating situation of the cogeneration apparatus 121 increases two fold or more in the case of use by three houses. Thus, the effect of reducing lighting and heating expenses increases.

In this embodiment, one cogeneration apparatus 121 and hot water tank 122 are installed for three houses.

An example of a possible system is that electricity charges and hot water charges are measured by the watt-hour meter 124 and hot water level meter 125 installed at each household, recorded at the operation control apparatus 126 and charged to each household.

In such a system, it is also possible to install the cogeneration apparatus 121 and hot water tank 122 on a basis of a lease contract and adopt a system of charging each household for lighting and heating expenses.

Of course, as in the case of aforementioned Embodiment 6, it is also possible for each household to introduce a lease contract to use not only the cogeneration apparatus 121 and/or hot water tank 122 but also other cogeneration apparatus and/or hot water tank. Adopting such a system allows each user to select a supply of electricity or heat to be supplied more economically, making it possible to more efficient use of heat and electricity.

Furthermore, since a shortage of hot water is anticipated due to the use of the system by three houses, a configuration using the backup burner 123 is adopted to handle the shortage of hot water. Control of such a backup burner can be carried out by the operation control apparatus 126 or by another control apparatus combined with the operation control apparatus 126.

This makes it possible to provide a cogeneration system with high operating efficiency and a great effect of reducing lighting and heating expenses.

As shown above, Embodiments 1 to 7 have been explained in detail.

The present invention includes a program, which allows a computer to execute all or some of functions of means (or apparatuses, elements, circuits, sections, etc.) of the above-described cogeneration apparatus of the present invention and which operates in cooperation with the computer. Of course, the computer is not limited to pure hardware such as a CPU but also firmware or OS or hardware including peripheral devices can also be used.

Furthermore, the present invention includes a program, which allows a computer to execute all or some of operations of steps (or processes, operations, actions, etc.) of the above-described cogeneration method of the present invention and which operates in cooperation with the computer.

By the way, some of means (or apparatuses, elements, circuits, sections, etc.) of the present invention and some of steps (or processes, operations, actions, etc.) of the present invention mean a plurality of means or some means in a step or steps, or some functions or some operations in one means or step.

Furthermore, some apparatuses (or elements, circuits, sections, etc.) of the present invention mean some apparatuses out of a plurality of apparatuses or some means (or elements, circuits, sections, etc.) in one apparatus, or some function in one means.

Furthermore, a computer-readable recording medium, which stores the program of the present invention, is also included in the present invention. A mode of usage of the program of the present invention may also be a mode, which is recorded in a computer-readable recording medium and operates in cooperation with the computer. Furthermore, a mode of usage of the program of the present invention may also be a mode, which is transmitted through a transmission medium, read by the computer and operates in cooperation with the computer. An example of the recording medium is ROM and examples of the transmission medium include transmission media such as the Internet, light, radio wave and sonic wave, etc.

By the way, the configuration of the present invention can also be implemented by software or hardware.

Furthermore, the present invention includes a medium that stores a program which allows a computer to execute all or some of means or all or some of functions of the above-described cogeneration apparatus of the present invention and which is computer-readable and allows the above-described read program to execute the above-described functions in cooperation with the computer.

Furthermore, the present invention also includes a medium that stores a program which allows a computer to execute all or some of steps or all or some of operations of the above-described cogeneration method of the present invention and which is computer-readable and allows the above-described read program to execute the above-described operations in cooperation with the computer.

The present invention can provide a fuel cell power generation apparatus capable of speedily respond to variations in demands for power and/or heat and generate an amount of power and/or heat required. In such a fuel cell power generation apparatus:
(1) An amount of load power detected by the load power amount detecting means is stored in the storing means as load power amount monitoring information according to a time counting signal from the time counting means, and signals for controlling the flow rates of the fuel gas and oxidizer gas according to a daily load characteristic of power load on the flow rate controlling means are output based on this load power amount monitoring information, which makes it possible to always store the latest load power pattern as a demand characteristic specific to the user, learn and operate the latest load pattern and thereby make compatible a stable operation without drastic load follow-up variations with an economical operation.
(2) Variations in demand due to seasonal variation, or increase/decrease of the number of user family members are also updated and learned as a daily power load characteristic, which allows an economical operation commensurate with the load demand all the time.
(3) Charging the secondary cell in a low load time zone based on the load power amount monitoring information of the fuel cell makes it possible to secure a charging voltage and charging time, prevent deterioration of the secondary cell and extend the life thereof.
(4) It is possible to charge the secondary cell in a low load time zone and compensate for a shortage of heat supply with respect to the actual heat load demand based on the heat load monitoring information from the heat load detecting means, reliably meet the heat demand of the user and further improve convenience.
(5) Detecting the completion of charging of the secondary cell through the charging power amount detecting means can prevent performance deterioration of the secondary cell due to overcharging and extend the life of the fuel cell power generation apparatus.
(6) The exhaust heat recollection amount increase inputting means provide an amount of exhaust heat recollection based on the heat load monitoring information and the heating means allows operation for compensating for a shortage in the event of an emergent heat demand, which secures the required amount of heat demand and further improves convenience.

The present invention can provide a cogeneration system capable of high efficiency and high stability operation. In such a cogeneration system:
(1) Handling loads of a plurality of houses increases a total amount of power generation and increases the effect of reducing lighting and heating expenses through cogeneration.
(2) Handling a plurality of houses with different loads reduces variations in power generation and hot water load, facilitatesmore accurate load follow-up, increases the rate of self-sufficiency with respect to the power load and makes it easier to achieve the effect of reducing lighting and heating expenses.
(3) Purchasing or lease contract by a plurality of houses reduces initial investment on the cogeneration system and makes installation easier.
(4) Even if there is a mismatch between power load and hot water load at a house, use of a backup burner solves the problem only using a small hot water tank, which results in a reduction of initial investment.

### Industrial Applicability

As is apparent from the above descriptions, the present invention has an advantage of being able to perform more economical power generation using, for example, a fuel cell.

## Claims

1. A cogeneration apparatus, comprising:
power and heat generating means of generating power and heat to be supplied to a consumption point;
storing means of storing data on past patterns of time variations of power and/or heat consumption at said consumption point; and
controlling means of performing control for regulating said generation of power and/or heat to be performed, based on said data stored.

2. The cogeneration apparatus according to claim 1, further comprising:
detectingmeans of detecting time variations of power and/or heat consumption at said consumption point; and
updating means of updating said data stored, based on said detection result.

3. The cogeneration apparatus according to claim 2, further comprising fuel supplying means of supplying a fuel to generate said power and heat for said power and heat generating means,
wherein the control for regulating said generation of power and/or heat to be performed is control over a supply of said fuel.

4. The cogeneration apparatus according to claim 3, further comprising charging/discharging means of charging using said generated power and discharging using said charged power.

5. The cogeneration apparatus according to claim 4,
wherein the control over a supply of said fuel is performed considering an amount of storage of said charging/discharging means.

6. The cogeneration apparatus according to claim 3, further comprising:
hot water storing means of storing hot water using said generated heat; and
heating means of heating said stored hot water using said generated power.

7. The cogeneration apparatus according to claim 1, further comprising user-instructed data changing means of changing said stored data based on instructions of a user.

8. The cogeneration apparatus according to claim 1,
wherein there is a plurality of consumption points to which said generated power and heat is supplied, and the time variations of said power and/or heat consumption at said plurality of consumption points are a sum total of time variations of said power and/or heat consumption at each of said consumption points with respect to all of said plurality of consumption points.

9. The cogeneration apparatus according to claim 8,
wherein the time variations of said power and/or heat consumption at each of said consumption points are complementary.

10. The cogeneration apparatus according to claim 9,
wherein the time variations of said power and/or heat consumption at each of said consumption points are complementary means that not all time zones in which said power and/or heat is consumed at each of said consumption points are the same for all of saidplurality of consumption points.

11. The cogeneration apparatus according to claim 10,
wherein said plurality of consumption points is a plurality of houses, all of which are not the same in (1) layout, (2) area and (3) composition of residents.

12. The cogeneration apparatus according to claim 11,
wherein said power and heat generating means is a plurality of fuel cells leased for a leasing charge to each of said houses, and
said leasing charge for each house is determined according to power and/or heat consumption at said each house.

13. The cogeneration apparatus according to claim 1,
wherein there is a plurality of said power and heat generating means, and
the control for regulating said generation of power and/or heat is control for changing the number of said plurality of power and heat generating means to be operated.

14. A cogeneration method, comprising:
power and heat generating step of generating power and heat to be supplied to a consumption point;
a storing step of storing data on past patterns of time variations of power and/or heat consumption at said consumption point; and
a controlling step of checking said stored data, anticipating variations in consumption of power and/or heat to occur at said consumption point, and starting control for regulating said generation of power and/or heat to be performed.

15. A program to allow a computer to execute all or some of the storing step of storing data on past patterns of time variations of power and/or heat consumption at said consumption point, and the controlling step of checking said stored data, anticipating variations in consumption of power and/or heat to occur at said consumption point, and starting control for regulating said generation of power and/or heat to be performed, of the cogeneration method according to claim 14.

16. A medium which stores a program according to claim 15 and which can be processed by a computer.

## Amended claims

### Amended claims under Art. 19.1 PCT

**1.** A cogeneration apparatus, comprising:
power and heat generating means of generating power and heat to be supplied to a consumption point;
storing means of storing data on past patterns of time variations of power and/or heat consumption at said consumption point; and
controlling means of performing control for regulating said generation of power and/or heat to be performed, based on said data stored.

**2.** The cogeneration apparatus according to claim 1, further comprising:
detecting means of detecting time variations of power and/or heat consumption at said consumption point; and
updating means of updating said data stored, based on said detection result.

**3.** The cogeneration apparatus according to claim 2, further comprising fuel supplying means of supplying a fuel to generate said power and heat for said power and heat generating means,
wherein the control for regulating said generation of power and/or heat to be performed is control over a supply of said fuel.

**4.** The cogeneration apparatus according to claim 3, further comprising charging/discharging means of charging using said generated power and discharging using said charged power.

**5.** The cogeneration apparatus according to claim 4,
wherein the control over a supply of said fuel is performed considering an amount of storage of said charging/discharging means.

**6.** The cogeneration apparatus according to claim 3, further comprising:
hot water storing means of storing hot water using said generated heat; and
heating means of heating said stored hot water using said generated power.

**7.** The cogeneration apparatus according to claim 1, further comprising user-instructed data changing means of changing said stored data based on instructions of a user.

**8.** (deleted)

**9.** (deleted)

**10.** (deleted)

**11.** (deleted)

**12.** (deleted)

**13.** (deleted)

**14.** A cogeneration method, comprising:
power and heat generating step of generating power and heat to be supplied to a consumption point;
a storing step of storing data on past patterns of time variations of power and/or heat consumption at said consumption point; and
a controlling step of checking said stored data, anticipating variations in consumption of power and/or heat to occur at said consumption point, and starting control for regulating said generation of power and/or heat to be performed.

**15.** A program to allow a computer to execute all or some of the storing step of storing data on past patterns of time variations of power and/or heat consumption at said consumption point, and the controlling step of checking said stored data, anticipating variations in consumption of power and/or heat to occur at said consumption point, and starting control for regulating said generation of power and/or heat to be performed, of the cogeneration method according to claim 14.

**16.** A medium which stores a program according to claim 15 and which can be processed by a computer.
